# EUROPEAN PATENT SPECIFICATION

(11) **EP 3 467 436 B1**
(45) Date of publication and mention of the grant of the patent: **13.05.2020**
(21) Application number: 18197947.7
(22) Date of filing: 01.10.2018
(51) Int. Cl.: G01C 21/20, G05D 1/06

(54) **UNMANNED AERIAL VEHICLE, DATA PROCESSING DEVICE, PATH SELECTION DEVICE, PROCESSING METHOD AND PROCESSING PROGRAM**
UNBEMANNTES LUFTFAHRZEUG, DATENVERARBEITUNGSVORRICHTUNG, PFADAUSWAHLVORRICHTUNG, VERARBEITUNGSVERFAHREN UND VERARBEITUNGSPROGRAMM
VÉHICULE AÉRIEN SANS ÉQUIPAGE, DISPOSITIF DE TRAITEMENT DE DONNÉES, DISPOSITIF DE SÉLECTION DE TRAJET, PROCÉDÉ ET PROGRAMME DE TRAITEMENT

(30) Priority: 03.10.2017 JP 2017193683
(43) Date of publication of application: 10.04.2019
(73) Proprietor: Topcon Corporation, Tokyo 174-8580 (JP)
(72) Inventor: SASAKI, You, Tokyo 174-8580 (JP)
(74) Representative: Weickmann & Weickmann PartmbB

(56) References cited:
- US-A1- 2014 032 034
- US-A1- 2017 075 359

## Description

### Technical Field

The present disclosure relates to a technique allowing an unmanned aerial vehicle to return or land in an optimum path.

### Background Art

There is a method of tracking a flying UAV (Unmanned Aerial Vehicle) by a TS (total station) and determining the position of the UAV using the laser ranging function of the TS (see, for example, Patent Document 1).

### Prior technical Document

### Patent Document

Patent Document 1: US 2014/0210663
Patent Document 2: US 2014/032034 A1
Patent Document 3: US 2017/075359 A1

US 2014/032034 A1 discloses systems and methods for transportation of goods using autonomous and/or remotely piloted unmanned aircraft vehicles. US 2017/075359 A1 discloses system and method of adaptive multi-scale perception of a target for an aircraft.

### Summary

### Problem to be Solved by the Disclosure

During flight of an unmanned aerial vehicle such as a UAV, sometimes the aerial vehicle must be returned urgently due to a reason such as a decrease in electric power of a battery equipped therein, or an interruption of communication with a wireless operator. Among the current emergency response measures, there is a method of returning at the highest altitude during flight in order to avoid obstacles, a method of landing the unmanned aerial vehicle on the spot, or the like. However, returning at the highest altitude during flight increases the amount of consumption of the battery, and the landing of the unmanned aerial vehicle on the spot has a huge risk since the status of the landing site is sometimes unknown. Therefore, an object of the present disclosure is to improve a technique related to actions during returning and landing of an unmanned aerial vehicle capable of reducing risk.

### Means for Solving the Problem

An disclosure according to a first aspect is a path selection device for controlling return flight of an unmanned aerial vehicle, the path selection device being located on the unmanned aerial vehicle, the path selection device comprising: a landing position information receiving portion that receives from an operating apparatus a landing position of the unmanned aerial vehicle; a vehicle body position information receiving portion that receives the current position of the unmanned aerial vehicle determined by a GNSS position determining device of the unmanned aerial vehicle; a scanned data receiving portion capable of receiving three-dimensional scanned data on a scanned target acquired by scanning by a laser scanner comprised in the unmanned aerial vehicle; a scan map creating portion that creates a three-dimensional map based on the three-dimensional scanned data received by the scanned data receiving portion; a no-fly place extracting portion that extracts a no-fly place forming a flight obstacle in the three-dimensional map; and a path selecting portion that selects, one from flight paths which are determined according to the three-dimensional map and the no-fly place and which are from the current position to the landing position of the unmanned aerial vehicle and bypass the no-fly place, as a return flight path of the unmanned aerial vehicle, the determined flight paths comprise: a flight path not passing the no-fly place, and a flight path passing at least one no-fly place but having a current altitude higher than the altitude of the at least one no-fly place.

Specifically, the scan map creating portion creates the three-dimensional map so that a place whose the three-dimensional scanned data is not obtained by the laser scanner provided in the unmanned aerial vehicle is formed in a rectangular parallelepiped on the three-dimensional map; the no-fly place extracting portion further extracts, as the no-fly place, the place formed on the three-dimensional map in a rectangular parallelepiped whose the three-dimensional scanned data is not obtained by the laser scanner provided in the unmanned aerial vehicle. The path selection device further comprises at least one of: a flight distance calculating portion capable of calculating flight distances if the unmanned aerial vehicle flies on the determined flight paths, and a battery consumption amount calculating portion capable of calculating a battery consumption amount if the unmanned aerial vehicle flies on the determined flight paths, and wherein the path selecting portion selects a return flight path of the unmanned aerial vehicle using at least one of the flight distance and the battery consumption amount as a path selection factor

An disclosure according to a second aspect is characterized by, in the disclosure according to the first aspect, comprising a vehicle body manipulation signal generating portion that generates a signal causing the unmanned aerial vehicle to fly on a flight path selected by the path selecting portion. An disclosure according to a third aspect is characterized by, in the disclosure according to any one of the first to second aspects, comprising a landable site searching portion that searches, from the three-dimensional map, for a place where the unmanned aerial vehicle can land; wherein the path selecting portion selects a return flight path of the unmanned aerial vehicle, wherein the place which the unmanned aerial vehicle can land at and is searched by the landable site searching portion is used as the landing position.

An disclosure according to a fourth aspect is characterized by, in the disclosure according to any one of the first to third aspects, comprising an externally created map receiving portion that receives the three-dimensional map created outside the unmanned aerial vehicle; wherein the path selecting portion selects a return flight path of the unmanned aerial vehicle using the three-dimensional map received by the externally created map receiving portion.

An disclosure according to a fifth aspect is an unmanned aerial vehicle comprising a path selection device according to any one of the first to fourth aspects. An disclosure according to a sixth aspect is a data processing device comprising a path selection device according to any one of the first to fourth aspects.

An disclosure according to a seventh aspect is a control method for an unmanned aerial vehicle for controlling return flight of an unmanned aerial vehicle, comprising: a landing position information receiving step of receiving a landing position of the unmanned aerial vehicle from an operating apparatus; a vehicle body position information receiving step of receiving the current position of the unmanned aerial vehicle, with the current position determined by a GNSS position determining device of the unmanned aerial vehicle; a scanned data receiving step of receiving three-dimensional scanned data on a scanned target acquired by scanning by a laser scanner comprised in the unmanned aerial vehicle; a scan map creating step of creating a three-dimensional map based on the three-dimensional scanned data received in the scanned data receiving step; a no-fly place extracting step of extracting a no-fly place forming a flight obstacle in the three-dimensional map; and a path selecting step in which one flight path is selected from flight paths which are determined according to the three-dimensional map and the no-fly place and which are from the current position to the landing position of the unmanned aerial vehicle and bypass the no-fly place, as a return flight path of the unmanned aerial vehicle, the determined flight paths comprise: a flight path not passing the no-fly place, and a flight path passing at least one no-fly place but having a current altitude higher than the altitude of the at least one no-fly place. In the scan map creating step, the three-dimensional map is created so that a place whose the three-dimensional scanned data is not obtained by the laser scanner provided in the unmanned aerial vehicle is formed in a rectangular parallelepiped on the three-dimensional map; and in the no-fly place extracting step, the place formed on the three-dimensional map in a rectangular parallelepiped whose the three-dimensional scanned data is not obtained by the laser scanner provided in the unmanned aerial vehicle, is further extracted as the no-fly place. The method further comprises at least one of: a flight distance calculating step in which flight distances if the unmanned aerial vehicle flies on the determined flight paths are calculated, and a battery consumption amount calculating step in which a battery consumption amount if the unmanned aerial vehicle flies on the determined flight paths is calculated, and wherein in the path selecting step, a return flight path of the unmanned aerial vehicle is selected using at least one of the flight distance and the battery consumption amount as a path selection factor.

An disclosure according to an eighth aspect is a program for path selection, which is a program for controlling flight of an unmanned aerial vehicle that is read and executed by a computer, causing the computer to function as: a landing position information receiving portion that receives a landing position of the unmanned aerial vehicle from an operating apparatus; a vehicle body position information receiving portion that receives the current position of the unmanned aerial vehicle determined by a GNSS position determining device of the unmanned aerial vehicle; a scanned data receiving portion capable of receiving three-dimensional scanned data on a scanned target acquired by scanning by a laser scanner comprised in the unmanned aerial vehicle; a scan map creating portion that creates a three-dimensional map based on the three-dimensional scanned data received by the scanned data receiving portion; a no-fly place extracting portion that extracts a no-fly place forming a flight obstacle in the three-dimensional map; and a path selecting portion that selects, one from flight paths which are determined according to the three-dimensional map and the no-fly place and which are from the current position to the landing position of the unmanned aerial vehicle and in which the no-fly place is avoided, as a return flight path of the unmanned aerial vehicle, the determined flight paths comprise: a flight path not passing the no-fly place, and a flight path passing at least one no-fly place but having a current altitude higher than the altitude of the at least one no-fly place. The scan map creating portion creates the three-dimensional map so that a place whose the three-dimensional scanned data is not obtained by the laser scanner provided in the unmanned aerial vehicle is formed in a rectangular parallelepiped on the three-dimensional map; and the no-fly place extracting portion further extracts, as the no-fly place, the place formed on the three-dimensional map in a rectangular parallelepiped whose the three-dimensional scanned data is not obtained by the laser scanner provided in the unmanned aerial vehicle. The computer is further caused to function as at least one of: a flight distance calculating portion capable of calculating flight distances if the unmanned aerial vehicle flies on the determined flight paths, and a battery consumption amount calculating portion capable of calculating a battery consumption amount if the unmanned aerial vehicle flies on the determined flight paths, and wherein the path selecting portion selects a return flight path of the unmanned aerial vehicle using at least one of the flight distance and the battery consumption amount as a path selection factor.

### Effects of the Disclosure

According to the present disclosure, when a problem occurs that it is necessary for an unmanned aerial vehicle such as a UAV in flight to return or land, it is possible to select an action with less risk. For example, when there is a sudden decrease in battery during flight of the UAV and the UAV is required to make a certain response, a flight path can be selected on the UAV side where an object forming an obstacle can be avoided and a battery consumption amount can be suppressed as much as possible, so as to return or land the UAV.

### Brief Description of Drawings

- FIG. 1: is a conceptual diagram of an embodiment.
- FIG. 2: is a block diagram of a UAV.
- FIG. 3: is a block diagram of a path selection device comprised in the UAV.
- FIG. 4: is a conceptual diagram of a three-dimensional map.
- FIG. 5: is a flowchart showing an example of processing.
- FIG. 6: is a flowchart showing an example of processing.
- FIG. 7: is a block diagram of an external data processing device.
- FIG. 8: is a flowchart showing an example of processing.
- FIG. 9: is a block diagram of an external data processing device.

### Detailed Description of Embodiments

### 1. First Embodiment

### (Overview)

In general, when an unmanned aerial vehicle such as a UAV is performing an action accompanied by an altitude increase in the air, a large amount of electric power is consumed, and the electric quantity of the equipped battery may be insufficient. Therefore, in the present embodiment, a configuration is shown in which it is possible to select a path enabling a return without performing an altitude increasing action as far as possible.

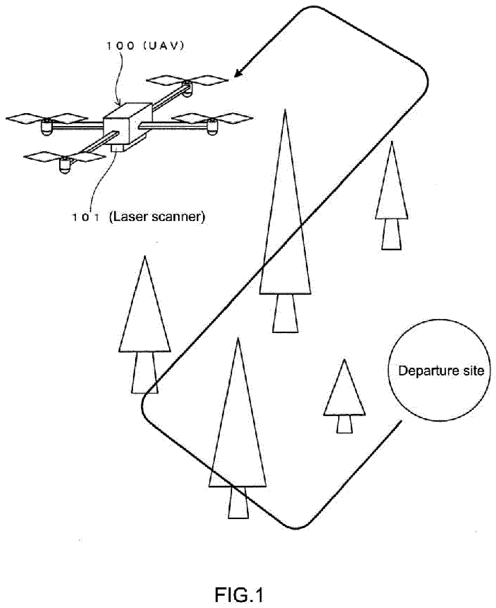

A flying UAV 100 is shown in FIG. 1. The UAV 100 comprises a laser scanner 101, and creates, based on data obtained by laser scanning while flying, a three-dimensional map of places through which it passes as a flight path. The UAV 100 uses the three-dimensional map to select a flight (return) path.

Furthermore, the UAV 100 used in the present disclosure performs autonomous flight in accordance with a predetermined flight route, but flight control may also be performed by wireless manipulation.

### (Structure of the UAV)

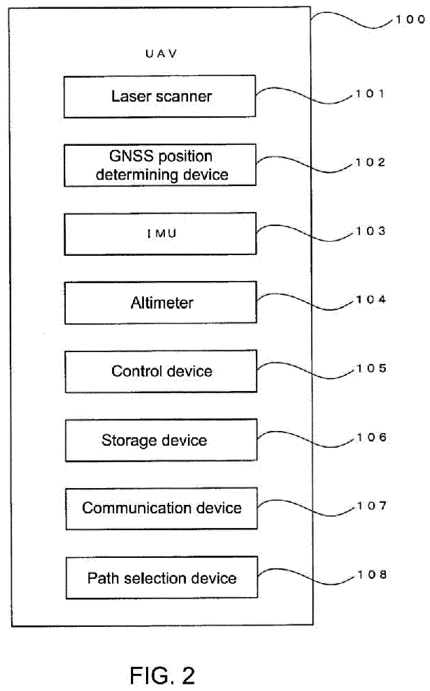

FIG. 2 is a block diagram of the UAV 100. The UAV 100 comprises a laser scanner 101, a GNSS position determining device (GNSS receiver) 102 using GNSS, an IMU (inertial measurement device) 103, an altimeter 104, a control device 105, a storage device 106, a communication device 107, and a path selection device 108.

The laser scanner 101 scans an object to be measured by a laser beam, and detects reflected light of the laser beam so as to obtain an approximate shape of the object to be measured as point cloud data having three-dimensional coordinates. In the utilization of the present disclosure, within a range that can be scanned during flight, an object that can be an obstacle during returning of the UAV 100 is used as a target to be measured. The laser scanner 101 is described in, for example, Japanese Patent Publication No. 2010-151682, Japanese Patent Publication No. 2008-268004, US Patent No. 8767190, US Patent No. 7969558, etc. In addition, as the laser scanner 101, an apparatus that performs electronic scanning may also be employed (see, for example, US2015/0293224).

The GNSS position determining device 102 receives a navigation signal from a navigation satellite represented by a GPS satellite, and performs positioning (determination of a position) on this basis. The position (longitude/latitude/altitude) of the GNSS position determining device 102 (the position of an antenna of the GNSS position determining device 102) in a map coordinate system is determined by the GNSS position determining device 102. The map coordinate system is a global coordinate system used when processing map data. Positional data obtained by the GNSS position determining device (for example, a general-purpose GPS receiver) is usually obtained as data in the map coordinate system.

The positioning to be performed by the GNSS position determining device 102 includes a single point positioning with low installation cost but low precision, or a relative positioning with high installation cost but high precision. Either of them can be used in the present disclosure. However, in order to allow the unmanned aerial vehicle such as the UAV to fly autonomously, it is necessary to acquire position information on the vehicle body as high-precision information, therefore positioning with high measurement precision such as relative positioning is desirable. As a technique of high-precision relative positioning, for example, a way of position measurement with high precision (with an error of several centimeters or less) using RTK (Real Time Kinematic) positioning may be exemplified. The RTK positioning is described on, for example, the homepage of the Geospatial Information Authority of Japan (http://terras.gsi.go.jp/geo_info/GNSS_iroiro.html).

In the RTK positioning, a fixed base station (GNSS, or TS (Total Station) with a GNSS device, or the like) is prepared at the site where the UAV 100 is flying, and the fixed base station and the UAV 100 perform positioning while communicating with the navigation satellite. By this positioning, the position information on the UAV 100 can be obtained with high precision.

In addition, the GNSS position determining device 102 has the function of a clock, and the position information on the UAV 100 or the laser scanned data is stored in a flight log together with information on the corresponding time.

The IMU 103 measures an acceleration applied to the UAV 100 in flight. An output from the IMU 103 is used for control of a posture of the UAV 100 in flight. In addition, information about the posture of the UAV 100 in flight is obtained from the output from the IMU 103. The altimeter 104 measures an air pressure and measures the altitude of the UAV 100.

The control device 105 performs various controls related to the UAV 100, in addition to selection of a flight path described later. The various controls related to the UAV 100 include flight control, control related to irradiation (scanning) by the laser scanner 101, control related to management of data stored in the storage device 106, and control related to an action of the communication device 107.

The storage device 106 stores a flight plan for flying over a predetermined flight path, and a flight log. The flight log is data that stores a position (longitude, latitude, altitude) in flight and data on the time at which it is measured. The measurement of the position in flight is performed at a specific time interval of 0.5 seconds or 1 second) (of course, there may be a case of irregular timing), and the positional data measured in real time is stored in the flight log in association with the measurement time. In addition, the time at which the laser scanner 101 performs irradiation (scanning) and the image data, data about the posture of the UAV 100 measured by the IMU 103, and altitude data measured by the altimeter 104 are also stored in the storage device 106 in a state of being associated with the flight log.

The communication device 107 has a wireless communication function. The communication device 107 performs, by means of the wireless communication function, transmission and reception of an operation signal between the UAV 100 and an operating apparatus (a controller operated by an operator operating the UAV 100 on the ground), communication for location positioning performed between the UAV 100 and the fixed base station or the navigation satellite, and transmission and reception of scanned data scanned by the UAV 100 in flight, a three-dimensional map created from the scanned data, or positioning data to/from other apparatuses.

The communication device 107 has a wired communication function in addition to the wireless communication function. The communication device 107 uses the wired communication function to perform communication between the UAV 100 in a non-flight state (landed state) and other apparatuses. For example, reception of a signal related to a flight operation (reception of a control signal from an operation controller), reception of data on a flight plan, transmission of log data to other apparatuses, and the like are performed by the communication device 107. Furthermore, the communication device 107 may also have an optical communication function. The above description of the communication device 107 is also applicable to a communication portion 304 and a communication device 401 described later.

The path selection device 108 creates a three-dimensional map from the scanned data obtained by the laser scanner 101. Then, an object forming an obstacle to the flight of the UAV 100 is extracted using the three-dimensional map, and an optimum path is selected by avoiding a place where the extracted obstacle is present or a place where laser scanning is not performed and where the status is unknown.

### (Structure of the Path Selection Device)

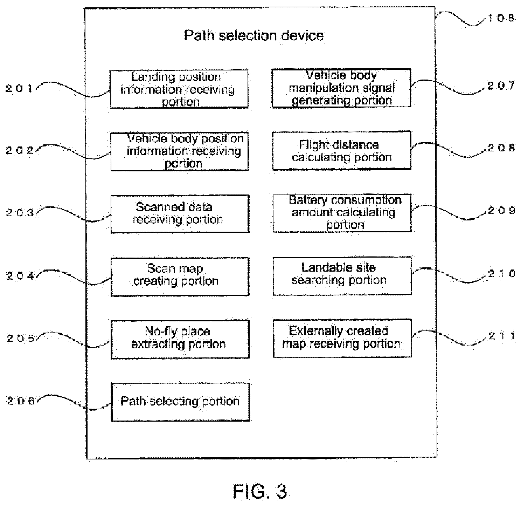

FIG. 3 is a block diagram of the path selection device 108. The path selection device 108 of the present embodiment comprises a landing position information receiving portion 201, a vehicle body position information receiving portion 202, a scanned data receiving portion 203, a scan map creating portion 204, a no-fly place extracting portion 205, a path selecting portion 206, and a vehicle body manipulation signal generating portion 207.

Each of the functional portions of the control device 105 shown in FIG. 3 is constructed by, for example, an electronic circuit such as a CPU (Central Processing Unit), an ASIC (Application Specific Integrated Circuit), a PLD (Programmable Logic Device) represented by an FPGA (Field Programmable Gate Array), or the like. In addition, it is also possible to construct a part of the functions by dedicated hardware, and construct the other part thereof by a general-purpose microcomputer.

It is determined, in consideration of the required calculation speed, cost, power consumption, and the like, whether each of the functional portions is constructed by dedicated hardware or is constructed by software by executing a program in the CPU. Furthermore, the constructions of the functional portion by dedicated hardware and by software are equivalent from the viewpoint of implementing the determined function.

The landing position information receiving portion 201 receives position information on a site where the UAV 100 is to be returned or landed. Furthermore, the number of the received pieces of position information is not limited to one, or may also be more than one.

The vehicle body position information receiving portion 202 receives position information on the UAV 100 determined by the GNSS position determining device 102. The scanned data receiving portion 203 acquires laser scanned data scanned by the laser scanner 101. The above structures of the vehicle body position information receiving portion 202 and the scanned data receiving portion 203 are also applicable to a vehicle body position information receiving portion 301 and a scanned data receiving portion 302 described later.

The scan map creating portion 204 creates a three-dimensional map from the laser scanned data received by the scanned data receiving portion 203. Here, since the laser scanned data acquired by the laser scanner 101 is obtained by a coordinate system fixed to the flying UAV 100, scanning points are subjected to coordinate transformation into a map coordinate system based on the position and posture of the UAV 100 during scanning. The coordinate transformation is performed by rotation and translation. Here, the rotation is performed by calculating a rotation matrix based on the data on the posture obtained from the IMU 103, and the translation is performed by calculating a translation vector according to the data on the position of the UAV 100 obtained from the GNSS position determining device 102. A technique for coordinate transformation of the laser scanned data obtained from the flying UAV into a map coordinate system (ground coordinate system) is described in, for example, Japanese Patent Application No. 2017-178831.

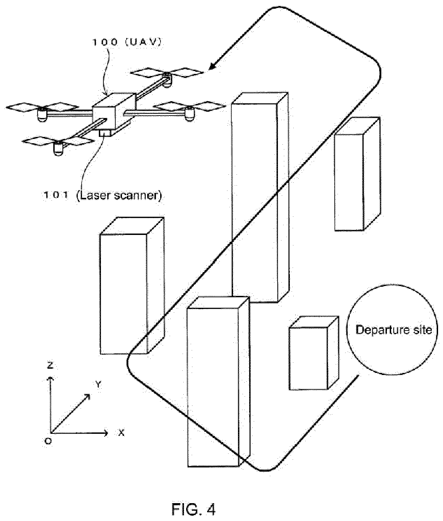

The created three-dimensional map may also be an outline map, and a three-dimensional map created from the terrain of FIG. 1 is, for example, as shown in FIG. 4. The three-dimensional map presents a three-dimensional space expressed by (x, y, z) components, and the maximum width, maximum depth, and altitude of a measured object are expressed by the (x, y, z) components, respectively. Therefore, the measured object is approximated to a rectangular parallelepiped in the three-dimensional space. In addition, a place outside the flight path of the UAV 100 where laser scanning cannot be performed and where the status is unknown is also approximated to a rectangular parallelepiped. The above description is also applicable to a scan map creating portion 303 described later.

The no-fly place extracting portion 205 extracts an object that forms an obstacle to the flight of the UAV 100 or a place where the UAV 100 is unallowed to fly due to its unknown status, as a no-fly place, in the three-dimensional map created by the scan map creating portion 204. For example, if the no-fly place is to be extracted for a path of a straight flight from the position of the UAV 100 at any time point to a return site, the positions of the UAV 100 and the return site on the three-dimensional map are determined, and a rectangular parallelepiped overlapping a straight line connecting the two points forms an obstacle.

The path selecting portion 206 selects an optimum path from among one or more paths enabling flight while avoiding an obstacle. The one or more paths enabling flight while avoiding an obstacle may be set in advance as a candidate route, or a flyable path may also be searched by the path selecting portion 206 according to the three-dimensional map created by the scan map creating portion 204 and the obstacle extracted by the obstacle extracting portion 205. When it is necessary to make a judgment when multiple flyable paths are searched, an optimum path is selected in consideration of the flight distance, the amount of electric power consumed, etc., in regard to paths where the extracted obstacle can be avoided.

For the selection of the path, for example, the following methods may be exemplified. First, a three-dimensional map is set and created by the scan map creating portion 204 as (x, y, z) = (100, 100, 100) composed of 100 unit spaces ((x, y, z) = (1, 1, 1)). Moreover, respective value of (x, y, z) of the width, depth and altitude of an obstacle or a place in an unknown status, i.e., a no-fly place, is expressed by integers, and if its position is also expressed by (x, y, z) with 1 ≤ x, y, z ≤ 100, it is known which unit space on the three-dimensional map has a no-fly place.

Similarly, if the position of the UAV 100 and the position of the return site are also expressed by (x, y, z) with 1 ≤ x, y, z ≤ 100, the position of the UAV 100 and the position of the return site on the three-dimensional map can also be determined. The position of the UAV 100 and the position of the return site determined on the three-dimensional map are corresponding to any one of the 100 unit spaces.

Therefore, a unit space corresponding to the position of the UAV 100 is regarded as a starting site, a unit space corresponding to the position of the return site is regarded as a goal site, a unit space with an obstacle and a unit space without scanned data and in an unknown status are regarded as no-fly places, and a path enabling a return while avoiding (bypassing) an obstacle is obtained by searching for paths where only the unit spaces that are not the no-fly places are traversed from the starting site to the goal site. Further, in order to select the shortest path, a path having the smallest number of unit spaces to be traversed may be selected from the searched paths.

Furthermore, the scale of one side of the unit space may be variable. For example, if a flight is within 100 m, the unit space is set to 1 m × 1 m × 1 m, and when it exceeds 100 m, the unit space is set to 2 m × 2 m × 2 m, and thereafter the scale of one side of the unit space is also changed depending on the flight distance so as to cope with a wide variety of flight distances. However, there is such a problem that the unit space with an obstacle becomes larger as the scale is larger. Therefore, in the case of a long flight distance, it is possible to cope with this situation without excessively increasing the scale, by increasing the number of unit spaces constituting the three-dimensional map in advance.

The vehicle body manipulation signal generating portion 207 generates a signal for causing the UAV 100 to fly on the path selected by the path selecting portion 206. Therefore, the generated signal is transmitted to the control device 105 of the UAV 100.

### (An Example of Processing)

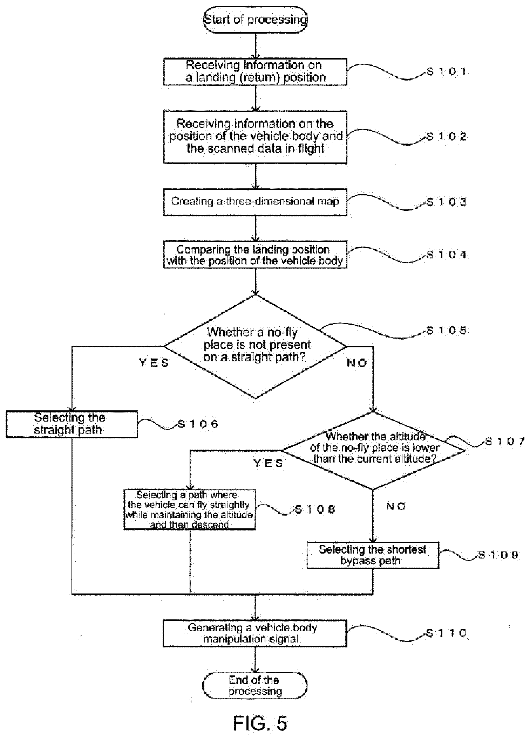

FIG. 5 shows an example of the processing of the present embodiment. First, the UAV 100 receives position information on the return site or landing site. The position information may be received at a timing either before start of flight of the UAV 100 or during the flight, but needs to be received before step S104 described later (step S101).

The UAV 100 intermittently scans by the laser scanner 101 while grasping its own position after the start of the flight. Thus, the position information on the UAV 100 and the scanned data are obtained together (step S102). Next, a three-dimensional map is created based on the data obtained in step S102 (step S103).

Then, when there is an opportunity to return the UAV 100, the current position of the UAV 100 and the position of the return site on the three-dimensional map are compared (step S104). Here, as an opportunity to return the UAV 100, an instruction from an operator, a decrease in battery quantity, a device failure, and the like may be exemplified.

Next, it is judged whether a no-fly place is extracted on a straight line connecting the current position of the UAV 100 and the return position, and it is confirmed whether a no-fly place is not present (step S105). In step S105, if a no-fly place is not present, a straight path in which the current position of the UAV 100 and the return position are straightly connected is selected as a return path (step S106). In step S105, if a no-fly place is present, it is judged whether the altitude of the no-fly place is lower than the current position of the UAV 100. Here, if multiple no-fly places are present, a no-fly place having the highest altitude becomes a target to be compared (step S107).

If the no-fly place has a low altitude, a path is selected in which the UAV can fly to overhead the return position while maintaining the altitude and descend to the return site (step S108). If the no-fly place has a high altitude, a path is selected in which the UAV can bypass to avoid an obstacle and fly towards the return site in the shortest route (step S109). Finally, a signal causing the UAV 100 to fly on the determined path is generated, thereby the processing is finished (step S110).

In the present embodiment, it is assumed that three flight paths (actions) are set in advance in the path selecting portion 206, which are a straight path in which the current position of the UAV 100 and the return position are straightly connected, a path in which the UAV can fly to overhead the return position while maintaining the altitude and descend to the return site, and a path in which the UAV can bypass to avoid a no-fly place and fly towards the return site in the shortest route. However, the flight path (action) set in the path selecting portion 206 may be, for example, arbitrarily set by the operator of the UAV 100. If the flight path (action) is to be arbitrarily set, the setting is performed before the process of step S105 is started for handling.

### (Variant Example)

Due to the fact that an amount of consumption of electric power of the battery corresponding to each flight action of the UAV 100 is known or similar facts, if it is possible to estimate a battery consumption amount during a flight from the current position of the UAV 100 to the return site, it is also possible to extract a no-fly place, search for paths where the no-fly place can be avoided, calculate the battery consumption amounts for the obtained paths, and select a path with the lowest battery consumption amount after steps S101 to 104 are performed.

In this case, the structure of the path selection device 108 may comprise a flight distance calculating portion 208 and a battery consumption amount calculating portion 209, in addition to the landing position information receiving portion 201, the vehicle body position information receiving portion 202, the scanned data receiving portion 203, the scan map creating portion 204, the no-fly place extracting portion 205, the path selecting portion 206, and the vehicle body manipulation signal generating portion 207.

The flight distance calculating portion 208 calculates a flight distance for a path from the current position of the UAV 100 to the return site that is searched by the path selecting portion 206. For a method of calculating the flight distance, for example, given a three-dimensional map constructed as a set of unit spaces, the flight distance can be calculated according to the scale of the unit space.

The battery consumption amount calculating portion 209 calculates an electric power consumption during the unmanned aerial vehicle is flying on a predetermined path. For example, if an amount of consumption of electric power of the battery corresponding to each flight action of the UAV 100 is obtained as data, the electric power consumption can be calculated according to the flight path searched by the path selecting portion 206 and the flight distance calculated by the flight distance calculating portion 208.

### 2. Second Embodiment

### (Overview)

When an opportunity to return the unmanned aerial vehicle such as the UAV occurs, a takeoff site is often used as the return site. However, it may be assumed that the remaining amount of the equipped battery is insufficient for return to the takeoff site. Therefore, a mode is shown in which a path is selected using a landable site other than the takeoff site as a final landing site.

### (Structure)

The structure of the UAV 100 is as shown in FIG. 2, and is not different from the first embodiment. However, the path selection device 108 comprises a landing position information receiving portion 201, a vehicle body position information receiving portion 202, a scanned data receiving portion 203, a scan map creating portion 204, a no-fly place extracting portion 205, a path selecting portion 206, a vehicle body manipulation signal generating portion 207, a flight distance calculating portion 208, a battery consumption amount calculating portion 209, and a landable site searching portion 210 in FIG. 3.

The landable site searching portion 210 searches for a site, where the UAV 100 can land, from a three-dimensional map created by the scan map creating portion 204. As a search for a landable site, a site with z=0 is selected as a landable site, which is a flat land, on a three-dimensional space expressed by (x, y, z) components, which is a three-dimensional map.

Here, there may be a case where the site with z=0 is not a land but a water surface such as a river. Therefore, when sites with z=0 are slenderly continuous, it is judged that these places are rivers, and this situation is handled by excluding them from the landable sites. That is, a feature of a terrain capable of generating a risk of being flooded or the like during landing is defined in advance, and a place having the defined feature is excluded during the searching of the landable site.

A process is preferable in which a place with z=0 and with a width of a threshold or more (for example, 5 m × 5 m or more) is selected as the landable site. In addition, in this case, a process is also effective in which a place where z is not equal to 0 but z is equal to a constant value (or a place where z can be regarded as a constant value) is selected as a flat land.

### (An Example of Processing)

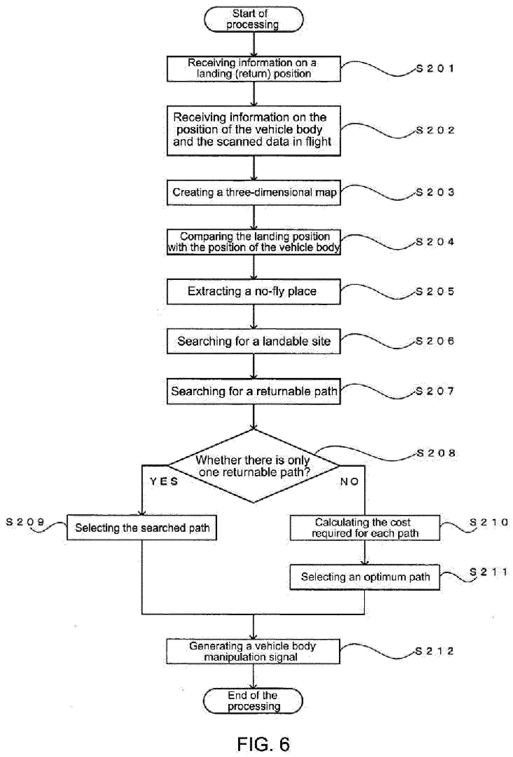

FIG. 6 shows an example of the processing of the present embodiment. First, the UAV 100 receives position information on a landing site. Here, the received position information on the landing site refers to position information on a landable site if there is the landable site at a takeoff site and within the range that can be visually observed by an operator of the UAV 100. Furthermore, these pieces of position information are received by the landing position information receiving portion 201 (step S201).

Then, the unmanned aerial vehicle flies while obtaining position information on the aerial vehicle itself and scanned data (step S202). A three-dimensional map is created according to the obtained position information on the aerial vehicle itself and scanned data (step S203). The current position of the UAV 100 on the created three-dimensional map is compared with the position(s) of one or more landing sites received in step S201 (step S204).

Next, after a no-fly place is extracted (step S205), it is searched on the three-dimensional map whether there is a landable site in addition to the landing site received in step S201, and if there is a landable site, the site is also added as a landing site (step S206). Next, a path where the current position of the UAV 100 and the position(s) of one or more landing sites are connected and where the no-fly place can be avoided is searched on the three-dimensional map (step S207).

Next, if one path is searched in step S207 (step S208), this path is selected (step S209). If the number of the paths searched in step S207 is not one but more than one (step S208), the assumed cost such as the flight distance or battery consumption amount for each path is calculated (step S210). Then, an optimum path is selected in consideration of the assumed cost of each path (step S211). Finally, a signal causing the UAV 100 to fly on the selected path is generated (step S212), and the processing is finished.

### (Variant Example)

The extraction/determination of the path may also be performed by using the landable site searched by the landable site searching portion 210 as the final landing site, without receiving the landing site by the landing position information receiving portion 201. However, in the case where the landing site searching portion 210 does not find a landable site, this situation is handled by, for example, taking a risk to land on the spot.

### 3. Third Embodiment

### (Overview)

It is also possible to adopt a configuration in which the path selection is carried out by performing laser scanning on the UAV side, creating a three-dimensional map on the external data processing device side, and using the three-dimensional map on the UAV side. At this time, the scanned data obtained on the UAV side is transmitted to the external data processing device side, and the external data processing device side creates a three-dimensional map according to the received scanned data. Then, the three-dimensional map created by the external data processing device side is transmitted to the UAV side.

In the present embodiment, a three-dimensional map is created by both the UAV 100 and the external data processing device 300 on the scanned data obtained by the UAV 100. The advantage of creating a three-dimensional map by both the UAV 100 and the external data processing device 300 is that the UAV 100 can return using a three-dimensional map created by the UAV 100 even in the case where the UAV 100 fail to receive data of the three-dimensional map created by the external data processing device 300 due to communication disconnection or the like, and that it is possible to cope with a case where a device capable of processing a large amount of data in real time has a weight that cannot be loaded onto the flying object, i.e., the UAV 100.

Furthermore, since the device loaded on the UAV 100 is provided in order to prevent an accidental situation such as a situation in which data of the three-dimensional map created by the external data processing device 300 cannot be obtained, it does not need to have high processing capability.

### (Structure)

The structure of the UAV 100 is as shown in FIG. 2, and is not different from the first embodiment and the second embodiment. However, the path selection device 108 comprises a landing position information receiving portion 201, a vehicle body position information receiving portion 202, a scanned data receiving portion 203, a scan map creating portion 204, a no-fly place extracting portion 205, a path selecting portion 206, a vehicle body manipulation signal generating portion 207, a flight distance calculating portion 208, a battery consumption amount calculating portion 209, and an externally created map receiving portion 211 in FIG. 3.

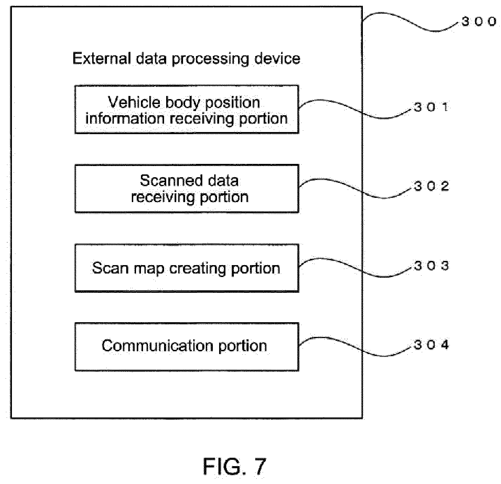

The structure of the external data processing device 300, as shown in FIG. 7, comprises a vehicle body position information receiving portion 301, a scanned data receiving portion 302, a scan map creating portion 303, and a communication portion 304. Examples of the external data processing device may include a TS (Total Station) having the structure shown in FIG. 7, etc.

### (An Example of Processing)

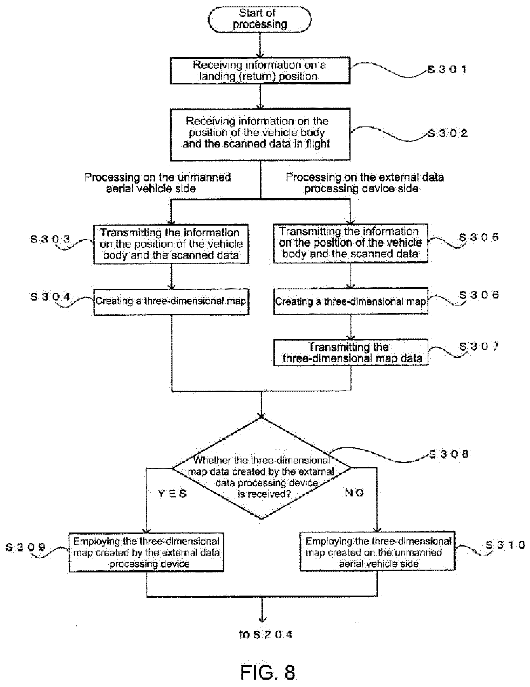

FIG. 8 shows an example of the processing of the present embodiment. First, the UAV 100 receives position information on a landing site (step S301). Then, the unmanned aerial vehicle flies while receiving position information on the aerial vehicle itself and scanned data (step S302). The obtained position information on the aerial vehicle itself and scanned data are transmitted from the UAV 100 to the external data processing device (step S303), and are used for creating a three-dimensional map on the UAV 100 side (step S304).

If the external data processing device receives the position information on the UAV 100 and the scanned data from the UAV 100 (step S305), a three-dimensional map is also created on the external data processing device side (step S306). The data of the three-dimensional map created on the external data processing device side is transmitted to the UAV 100 side at any time (step S307). Since the UAV 100 is in flight and the position of the vehicle body is constantly changing, it is desirable that an interval of transmission of the three-dimensional map data be as short as possible (several seconds or less).

Then, if the UAV 100 can receive the data of the three-dimensional map created on the external data processing device side, these data are preferentially employed (steps S308, S309, and S310). Thereafter, the same processing as the subsequent steps following step S204 in FIG. 6 is executed using the employed three-dimensional map.

In addition, if the external data processing device 300 scans around the UAV 100 like a TS (Total Station) and obtains the scanned data, the scanned data can be used when the three-dimensional map is being created in step S306.

When a three-dimensional map is created on the external data processing device side and the data is transmitted to the UAV 100 side as in the present embodiment, it is necessary to perform data communication in real time. Here, if the definition of unit spaces constituting a three-dimensional map is set as a definition common to the UAV 100 and the external data processing device by using the foregoing method of constructing a three-dimensional map by unit spaces, then the search of a return path and the selection of an optimum path can be performed on the UAV 100 side by transmitting information indicating whether the respective unit spaces constituting the three-dimensional map are no-fly spaces after creating the three-dimensional map by the external data processing device. That is, the UAV 100 can perform the search and selection of the return path by transmitting, from the external data processing device, a binary signal identical to the number of the unit spaces constituting the three-dimensional map.

### 4. Fourth Embodiment

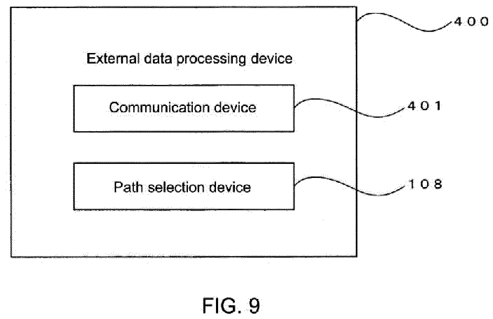

The path selection device 108 is not limited to the configuration provided in the UAV 100. For example, as shown in FIG. 9, an external data processing device 400 comprising a communication device 401 and a path selection device 108 can receive position information on the UAV 100 and scanned data obtained by the UAV 100 through the communication device 401 to create a three-dimensional map and determine a return path. Then, the UAV 100 is returned by transmitting to the UAV 100 a vehicle body manipulation signal that causes it to fly on the determined return path.

### Industrial Applicability

The present disclosure can be used to determine a return path of or a path to a landing site of an unmanned aerial vehicle.

An unmanned aerial vehicle (100) is allowed to return or land in an optimum path. Disclosed is a path selection device (108) for controlling flight of an unmanned aerial vehicle (100), comprising: a landing position information receiving portion (201) that receives a landing position of the unmanned aerial vehicle (100); a vehicle body position information receiving portion (202, 301) that receives the current position of the unmanned aerial vehicle (100); a scanned data receiving portion (203, 302) capable of receiving three-dimensional scanned data on a scanned target acquired by scanning by a laser scanner (101) comprised in the unmanned aerial vehicle (100); a scan map creating portion (204, 303) that creates a three-dimensional map based on the three-dimensional scanned data received by the scanned data receiving portion (203, 302); a no-fly place extracting portion (205) that extracts a no-fly place forming a flight obstacle in the three-dimensional map; and a path selecting portion (206) that selects, in the three dimensional map, a flight path of the unmanned aerial vehicle (100) which is from the current position to the landing position of the unmanned aerial vehicle (100) and in which the no-fly place can be avoided.

## Claims

1. A path selection device (108) for controlling return flight of an unmanned aerial vehicle (100), the path selection device (108) being located on the unmanned aerial vehicle (100), **characterized in that** the path selection device (108) comprises:
a landing position information receiving portion (201) that receives from an operating apparatus a landing position of the unmanned aerial vehicle (100);
a vehicle body position information receiving portion (202) that receives a current position of the unmanned aerial vehicle (100) determined by a GNSS position determining device (102) of the unmanned aerial vehicle (100);
a scanned data receiving portion (203) capable of receiving three-dimensional scanned data on a scanned target acquired by scanning by a laser scanner (101) comprised in the unmanned aerial vehicle (100);
a scan map creating portion (204) that creates a three-dimensional map based on the three-dimensional scanned data received by the scanned data receiving portion (203);
a no-fly place extracting portion (205) that extracts a no-fly place forming a flight obstacle in the three-dimensional map; and
a path selecting portion (206) that selects a determined flight path, that is one from flight paths which are determined according to the three-dimensional map and the no-fly place and which are from the current position to the landing position of the unmanned aerial vehicle (100) and bypass the no-fly place, as a return flight path of the unmanned aerial vehicle (100), the determined flight path comprises: a flight path not passing the no-fly place, and a flight path passing at least one no-fly place but having a current altitude higher than the altitude of the at least one no-fly place,
wherein the scan map creating portion (204) creates the three-dimensional map so that a place whose the three-dimensional scanned data is not obtained by the laser scanner (101) provided in the unmanned aerial vehicle (100) is formed in a rectangular parallelepiped on the three-dimensional map; and the no-fly place extracting portion (205) further extracts, as the no-fly place, the place formed on the three-dimensional map in a rectangular parallelepiped whose the three-dimensional scanned data is not obtained by the laser scanner (101) provided in the unmanned aerial vehicle (100), and
wherein the path selection device (108) further comprises at least one of: a flight distance calculating portion (208) capable of calculating flight distances if the unmanned aerial vehicle (100) flies on the determined flight paths, and a battery consumption amount calculating portion (209) capable of calculating a battery consumption amount if the unmanned aerial vehicle (100) flies on the determined flight paths, and wherein the path selecting portion (206) selects a return flight path of the unmanned aerial vehicle (100) using at least one of the flight distance and the battery consumption amount as a path selection factor.

2. The path selection device (108) according to claim 1, **characterized by**
comprising a vehicle body manipulation signal generating portion (207) that generates a signal causing the unmanned aerial vehicle (100) to fly on the flight path selected by the path selecting portion.

3. The path selection device (108) according to claim 1, **characterized by**
comprising a landable site searching portion (210) that searches, from the three-dimensional map, for a place where the unmanned aerial vehicle (100) can land,
wherein the path selecting portion (206) selects a return flight path of the unmanned aerial vehicle (100), wherein the place which the unmanned aerial vehicle (100) can land at and is searched by the landable site searching portion (210) is used as the landing position.

4. The path selection device (108) according to any one of claims 1 to 3, **characterized by**
comprising an externally created map receiving portion (211) that receives the three-dimensional map created outside the unmanned aerial vehicle (100),
wherein the path selecting portion (206) selects a return flight path of the unmanned aerial vehicle (100) using the three-dimensional map received by the externally created map receiving portion (211).

5. A control method of an unmanned aerial vehicle (100) for controlling return flight of the unmanned aerial vehicle (100), **characterized by** comprising:
a landing position information receiving step in which a landing position of the unmanned aerial vehicle (100) is received from an operating apparatus;
a vehicle body position information receiving step in which a current position of the unmanned aerial vehicle (100) is received, with the current position determined by a GNSS position determining device (102) of the unmanned aerial vehicle (100);
a scanned data receiving step in which three-dimensional scanned data on a scanned target acquired by scanning by a laser scanner (101) provided in the unmanned aerial vehicle (100) is received;
a scan map creating step in which a three-dimensional map based on the three-dimensional scanned data received in the scanned data receiving step is created;
a no-fly place extracting step in which a no-fly place forming a flight obstacle in the three-dimensional map is extracted; and
a path selecting step in which a determined flight path is selected from flight paths which are determined according to the three-dimensional map and the no-fly place and which are from the current position to the landing position of the unmanned aerial vehicle (100) and bypass the no-fly place, as a return flight path of the unmanned aerial vehicle (100), the determined flight path comprises:
a flight path not passing the no-fly place, and a flight path passing at least one no-fly place but having a current altitude higher than the altitude of the at least one no-fly place,
wherein in the scan map creating step, the three-dimensional map is created so that a place whose the three-dimensional scanned data is not obtained by the laser scanner (101) provided in the unmanned aerial vehicle (100) is formed in a rectangular parallelepiped on the three-dimensional map; and in the no-fly place extracting step, the place formed on the three-dimensional map in a rectangular parallelepiped whose the three-dimensional scanned data is not obtained by the laser scanner (101) provided in the unmanned aerial vehicle (100), is further extracted as the no-fly place, and
wherein the method further comprises at least one of: a flight distance calculating step in which flight distances if the unmanned aerial vehicle (100) flies on the determined flight paths are calculated, and a battery consumption amount calculating step in which a battery consumption amount if the unmanned aerial vehicle (100) flies on the determined flight paths is calculated, and wherein in the path selecting step, a return flight path of the unmanned aerial vehicle (100) is selected using at least one of the flight distance and the battery consumption amount as a path selection factor.

6. A program for path selection, which is a program for controlling flight of an unmanned aerial vehicle (100) that is read and executed by a computer,
**characterized by** causing the computer to function as:
a landing position information receiving portion (201) that receives a landing position of the unmanned aerial vehicle (100) from an operating apparatus;
a vehicle body position information receiving portion (202) that receives a current position of the unmanned aerial vehicle (100) determined by a GNSS position determining device (102) of the unmanned aerial vehicle (100);
a scanned data receiving portion (203) capable of receiving three-dimensional scanned data on a scanned target acquired by scanning by a laser scanner (101) comprised in the unmanned aerial vehicle (100);
a scan map creating portion (204) that creates a three-dimensional map based on the three-dimensional scanned data received by the scanned data receiving portion (203);
a no-fly place extracting portion (205) that extracts a no-fly place forming a flight obstacle in the three-dimensional map; and
a path selecting portion (206) that selects a determined flight path that is one from flight paths which are determined according to the three-dimensional map and the no-fly place and which are from the current position to the landing position of the unmanned aerial vehicle (100) and in which the no-fly place is avoided, as a return flight path of the unmanned aerial vehicle (100), the determined flight path comprises:
a flight path not passing the no-fly place, and a flight path passing at least one no-fly place but having a current altitude higher than the altitude of the at least one no-fly place,
wherein the scan map creating portion (204) creates the three-dimensional map so that a place whose the three-dimensional scanned data is not obtained by the laser scanner (101) provided in the unmanned aerial vehicle (100) is formed in a rectangular parallelepiped on the three-dimensional map; and the no-fly place extracting portion (205) further extracts, as the no-fly place, the place formed on the three-dimensional map in a rectangular parallelepiped whose the three-dimensional scanned data is not obtained by the laser scanner (101) provided in the unmanned aerial vehicle (100), and
wherein the computer is further caused to function as at least one of: a flight distance calculating portion (208) capable of calculating flight distances if the unmanned aerial vehicle (100) flies on the determined flight paths, and a battery consumption amount calculating portion (209) capable of calculating a battery consumption amount if the unmanned aerial vehicle (100) flies on the determined flight paths, and wherein the path selecting portion (206) selects a return flight path of the unmanned aerial vehicle (100) using at least one of the flight distance and the battery consumption amount as a path selection factor.

## Patentansprüche

1. Pfad-Auswahlvorrichtung (108) zum Steuern eines Rückflugs eines unbemannten Luftfahrzeugs (100), wobei die Pfad-Auswahlvorrichtung (108) an dem unbemannten Luftfahrzeug (100) angeordnet ist, **dadurch gekennzeichnet, dass** die Pfad-Auswahlvorrichtung (108) umfasst:
einen Landeposition-Informationen-Empfangsabschnitt (201), welcher von einer Betriebsvorrichtung eine Landeposition des unbemannten Luftfahrzeugs (100) empfängt;
einen Fahrzeugkörper-Position-Informationen-Empfangsabschnitt (202), welcher eine momentane Position des unbemannten Luftfahrzeugs (100) empfängt, welche durch eine GNSS-Position-Bestimmungsvorrichtung (102) des unbemannten Luftfahrzeugs (100) bestimmt worden ist;
einen Scandaten-Empfangsabschnitt (203), welcher in der Lage ist, dreidimensionale gescannte Daten auf ein gescanntes Ziel zu empfangen, welche durch Scannen durch einen Laser-Scanner (101) erfasst werden, welcher in dem unbemannten Luftfahrzeug (100) umfasst ist;
einen Scankarten-Erzeugungsabschnitt (204), welcher eine dreidimensionale Karte auf Grundlage der dreidimensionalen gescannten Daten erzeugt, welche durch den Scandaten-Empfangsabschnitt (203) empfangen worden sind;
einen Kein-Flug-Platz-Extraktionsabschnitt (205), welcher einen Kein-Flug-Platz, welcher ein Flug-Hindernis bildet, in der dreidimensionalen Karte extrahiert; und
einen Pfad-Auswahlabschnitt (206), welcher einen bestimmten Flug-Pfad auswählt, welcher einer ist aus Flug-Pfaden, welche gemäß der dreidimensionalen Karte und dem Kein-Flug-Platz bestimmt worden sind, und welche von der momentanen Position zu der Landeposition des unbemannten Luftfahrzeugs (100) sind und den Kein-Flug-Platz umgehen, als einen Rückflug-Pfad des unbemannten Luftfahrzeugs (100), wobei der bestimmte Flug-Pfad umfasst:
einen Flug-Pfad, welcher nicht den Klein-Flug-Platz passiert, und einen Flug-Pfad, welcher wenigstens einen Kein-Flug-Platz passiert, aber eine momentane Höhe aufweist, welche höher ist als die Höhe des wenigstens einen Kein-Flug-Platzes,
wobei der Scankarten-Erzeugungsabschnitt (204) die dreidimensionale Karte erzeugt, so dass ein Platz, von welchem die dreidimensionalen gescannten Daten nicht durch den Laser-Scanner (101) erhalten werden, welcher in dem unbemannten Luftfahrzeug (100) bereitgestellt ist, in einem rechteckigen Parallelepiped auf der dreidimensionalen Karte erzeugt wird; und der Kein-Flug-Platz-Extraktionsabschnitt (205) ferner, als den Kein-Flug-Platz, den Platz, welcher auf der dreidimensionalen Karte in einem rechteckigen Parallelepiped gebildet ist, extrahiert, dessen dreidimensionale gescannte Daten nicht durch den Laser-Scanner (101) erhalten werden, welcher in dem unbemannten Luftfahrzeug (100) bereitgestellt ist, und
wobei die Pfad-Auswahlvorrichtung (108) ferner wenigstens eines umfasst aus:
einem Flug-Distanz-Berechnungsabschnitt (208), welcher in der Lage ist, Flug-Distanzen zu berechnen, wenn das unbemannte Luftfahrzeug (100) auf den bestimmten Flug-Pfaden fliegt, und einem Batterie-Verbrauchsmenge-Berechnungsabschnitt (209), welcher in der Lage ist,
eine Batterie-Verbrauchsmenge zu berechnen, wenn das unbemannte Luftfahrzeug (100) auf den bestimmten Flug-Pfaden fliegt, und wobei der Pfad-Auswahlabschnitt (206) einen Rückflug-Pfad des unbemannten Luftfahrzeugs (100) unter Verwendung wenigstens eines aus der Flug-Distanz und der Batterie-Verbrauchsmenge als ein Pfad-Auswahlfaktor auswählt.

2. Pfad-Auswahlvorrichtung (108) nach Anspruch 1, **gekennzeichnet durch** Umfassen eines Fahrzeugkörper-Manipulation-Signal-Erzeugungsabschnitts (207), welcher ein Signal erzeugt, welches das unbemannte Luftfahrzeug (100) veranlasst, auf dem Flug-Pfad zu fliegen, welcher durch den Pfad-Auswahlabschnitt ausgewählt worden ist.

3. Pfad-Auswahlvorrichtung (108) nach Anspruch 1, **gekennzeichnet durch** Umfassen eines Suchabschnitts für eine landbare Stelle (210), welcher von der dreidimensionalen Karte nach einem Platz sucht, wo das unbemannte Luftfahrzeug (100) landen kann,
wobei der Pfad-Auswahlabschnitt (206) einen Rückflug-Pfad des unbemannten Luftfahrzeugs (100) auswählt, wobei der Platz, an welchem das unbemannte Luftfahrzeug (100) landen kann, und welcher durch den Suchabschnitt für eine landbare Stelle (210) gesucht wird, als die Landeposition verwendet wird.

4. Pfad-Auswahlvorrichtung (108) nach einem der Ansprüche 1 bis 3, **gekennzeichnet durch**
Umfassen eines Empfangsabschnitts für eine extern erzeugte Karte (211), welcher eine dreidimensionale Karte empfängt, welche außerhalb des unbemannten Luftfahrzeugs (100) erzeugt worden ist, wobei der Pfad-Auswahlabschnitt (206) einen Rückflug-Pfad des unbemannten Luftfahrzeugs (100) unter Verwendung der dreidimensionalen Karte auswählt, welche durch den Empfangsabschnitt für eine extern erzeugte Karte (211) empfangen worden ist.

5. Steuerverfahren eines unbemannten Luftfahrzeugs (100) zum Steuern eines Rückflugs des unbemannten Luftfahrzeugs (100), **dadurch gekennzeichnet, dass** es umfasst:
einen Landeposition-Informationen-Empfangsschritt, in welchem eine Landeposition des unbemannten Luftfahrzeugs (100) von einer Betriebsvorrichtung empfangen wird;
einen Fahrzeugkörper-Position-Informationen-Empfangsschritt, in welchem eine momentane Position des unbemannten Luftfahrzeugs (100) empfangen wird, welche durch eine GNSS-Position-Bestimmungsvorrichtung (102) des unbemannten Luftfahrzeugs (100) bestimmt wird;
einen Scandaten-Empfangsschritt, in welchem dreidimensionale gescannte Daten auf ein gescanntes Ziel empfangen werden, welche durch Scannen durch einen Laser-Scanner (101) erfasst werden, welcher in dem unbemannten Luftfahrzeug (100) bereitgestellt ist;
einen Scankarten-Erzeugungsschritt, in welchem eine dreidimensionale Karte auf Grundlage der dreidimensionalen gescannten Daten erzeugt wird, welche in dem Scandaten-Empfangsschritt empfangen worden sind;
einen Kein-Flug-Platz-Extraktionsschritt, in welchem einen Kein-Flug-Platz, welcher ein Flug-Hindernis bildet, in der dreidimensionalen Karte extrahiert wird; und
einen Pfad-Auswahlschritt, in welchem ein bestimmter Flug-Pfad aus Flug-Pfaden ausgewählt wird, welche gemäß der dreidimensionalen Karte und dem Kein-Flug-Platz bestimmt worden sind, und welche von der momentanen Position zu der Landeposition des unbemannten Luftfahrzeugs (100) sind und den Kein-Flug-Platz umgehen, als einen Rückflug-Pfad des unbemannten Luftfahrzeugs (100), wobei der bestimmte Flug-Pfad umfasst:
einen Flug-Pfad, welcher nicht den Klein-Flug-Platz passiert, und einen Flug-Pfad, welcher wenigstens einen Kein-Flug-Platz passiert, aber eine momentane Höhe aufweist, welche höher ist als die Höhe des wenigstens einen Kein-Flug-Platzes,
wobei in dem Scankarten-Erzeugungsschritt die dreidimensionale Karte erzeugt wird, so dass ein Platz, von welchem die dreidimensionalen gescannten Daten nicht durch den Laser-Scanner (101) erhalten werden, welcher in dem unbemannten Luftfahrzeug (100) bereitgestellt ist, in einem rechteckigen Parallelepiped auf der dreidimensionalen Karte erzeugt wird; und in dem Kein-Flug-Platz-Extraktionsschritt ferner der Platz, welcher auf der dreidimensionalen Karte in einem rechteckigen Parallelepiped gebildet wird, als der Kein-Flug-Platz extrahiert wird, dessen dreidimensionale gescannte Daten nicht durch den Laser-Scanner (101) erhalten werden, welcher in dem unbemannten Luftfahrzeug (100) bereitgestellt ist, und
wobei das Verfahren ferner wenigstens eines umfasst aus:
einem Flug-Distanz-Berechnungsschritt, in welchem Flug-Distanzen berechnet werden, wenn das unbemannte Luftfahrzeug (100) auf den bestimmten Flug-Pfaden fliegt, und einem Batterie-Verbrauchsmenge-Berechnungsschritt, in welchem eine Batterie-Verbrauchsmenge berechnet wird, wenn das unbemannte Luftfahrzeug (100) auf den bestimmten Flug-Pfaden fliegt, und wobei in dem Pfad-Auswahlschritt ein Rückflug-Pfad des unbemannten Luftfahrzeugs (100) unter Verwendung wenigstens eines aus der Flug-Distanz und der Batterie-Verbrauchsmenge als ein Pfad-Auswahlfaktor ausgewählt wird.

6. Programm für eine Pfad-Auswahl, welches ein Programm zum Steuern eines Flugs eines unbemannten Luftfahrzeugs (100) ist, welches durch einen Computer ausgelesen und ausgeführt wird,
**gekennzeichnet durch** ein Veranlassen des Computers zu fungieren als:
ein Landeposition-Informationen-Empfangsabschnitt (201), welcher von einer Betriebsvorrichtung eine Landeposition des unbemannten Luftfahrzeugs (100) empfängt;
ein Fahrzeugkörper-Position-Informationen-Empfangsabschnitt (202), welcher eine momentane Position des unbemannten Luftfahrzeugs (100) empfängt, welche durch eine GNSS-Position-Bestimmungsvorrichtung (102) des unbemannten Luftfahrzeugs (100) bestimmt worden ist;
ein Scandaten-Empfangsabschnitt (203), welcher in der Lage ist, dreidimensionale gescannte Daten auf ein gescanntes Ziel zu empfangen, welche durch Scannen durch einen Laser-Scanner (101) erfasst werden, welcher in dem unbemannten Luftfahrzeug (100) umfasst ist;
ein Scankarten-Erzeugungsabschnitt (204), welcher eine dreidimensionale Karte auf Grundlage der dreidimensionalen gescannten Daten erzeugt, welche durch den Scandaten-Empfangsabschnitt (203) empfangen worden sind;
ein Kein-Flug-Platz-Extraktionsabschnitt (205), welcher einen Kein-Flug-Platz, welcher ein Flug-Hindernis bildet, in der dreidimensionalen Karte extrahiert; und
ein Pfad-Auswahlabschnitt (206), welcher einen bestimmten Flug-Pfad auswählt, welcher einer ist aus Flug-Pfaden, welche gemäß der dreidimensionalen Karte und dem Kein-Flug-Platz bestimmt worden sind, und welche von der momentanen Position zu der Landeposition des unbemannten Luftfahrzeugs (100) sind und den Kein-Flug-Platz umgehen, als einen Rückflug-Pfad des unbemannten Luftfahrzeugs (100), wobei der bestimmte Flug-Pfad umfasst:
einen Flug-Pfad, welcher nicht den Klein-Flug-Platz passiert, und einen Flug-Pfad, welcher wenigstens einen Kein-Flug-Platz passiert, aber eine momentane Höhe aufweist, welche höher ist als die Höhe des wenigstens einen Kein-Flug-Platzes,
wobei der Scankarten-Erzeugungsabschnitt (204) die dreidimensionale Karte erzeugt, so dass ein Platz, von welchem die dreidimensionalen gescannten Daten nicht durch den Laser-Scanner (101) erhalten werden, welcher in dem unbemannten Luftfahrzeug (100) bereitgestellt ist, in einem rechteckigen Parallelepiped auf der dreidimensionalen Karte erzeugt wird; und der Kein-Flug-Platz-Extraktionsabschnitt (205) ferner, als den Kein-Flug-Platz, den Platz, welcher auf der dreidimensionalen Karte in einem rechteckigen Parallelepiped gebildet ist, extrahiert, dessen dreidimensionale gescannte Daten nicht durch den Laser-Scanner (101) erhalten werden, welcher in dem unbemannten Luftfahrzeug (100) bereitgestellt ist, und
wobei der Computer ferner dazu veranlasst wird, als wenigstens eines zu fungieren aus:
einem Flug-Distanz-Berechnungsabschnitt (208), welcher in der Lage ist, Flug-Distanzen zu berechnen, wenn das unbemannte Luftfahrzeug (100) auf den bestimmten Flug-Pfaden fliegt, und einem Batterie-Verbrauchsmenge-Berechnungsabschnitt (209), welcher in der Lage ist, eine Batterie-Verbrauchsmenge zu berechnen, wenn das unbemannte Luftfahrzeug (100) auf den bestimmten Flug-Pfaden fliegt, und wobei der Pfad-Auswahlabschnitt (206) einen Rückflug-Pfad des unbemannten Luftfahrzeugs (100) unter Verwendung wenigstens eines aus der Flug-Distanz und der Batterie-Verbrauchsmenge als ein Pfad-Auswahlfaktor auswählt.

## Revendications

1. Dispositif de sélection de trajectoire (108) pour commander le vol de retour d'un véhicule aérien sans pilote (100), le dispositif de sélection de trajectoire (108) étant situé sur le véhicule aérien sans pilote (100), **caractérisé en ce que** le dispositif de sélection de trajectoire (108) comprend :
une partie de réception d'informations de position d'atterrissage (201) qui reçoit d'un dispositif d'opération une position d'atterrissage du véhicule aérien sans pilote (100) ; une partie de réception d'informations de position du corps du véhicule (202) qui reçoit une position actuelle du véhicule aérien sans pilote (100) déterminée par un dispositif de détermination de position GNSS (102) du véhicule aérien sans pilote (100) ;
une partie de réception de données numérisées (203) capable de recevoir des données numérisées en trois dimensions sur une cible numérisée acquise par balayage par un scanner laser (101) compris dans le véhicule aérien sans pilote (100) ;
une partie de création de carte numérisée (204) qui crée une carte tridimensionnelle basée sur les données numérisées tridimensionnelles reçues par la partie de réception de données numérisées (203) ;
une partie d'extraction de lieu d'interdiction de vol (205) qui extrait un lieu d'interdiction de vol formant un obstacle de vol dans la carte tridimensionnelle ; et une partie de sélection de trajectoire (206) qui sélectionne une trajectoire de vol déterminée, c'est-à-dire une trajectoire de vol parmi les trajectoires de vol qui sont déterminées selon la carte tridimensionnelle et le lieu d'interdiction de vol et qui vont de la position actuelle à la position d'atterrissage du véhicule aérien sans pilote (100) et contournent le lieu d'interdiction de vol, comme trajectoire de vol de retour du véhicule aérien sans pilote (100), la trajectoire de vol déterminée comprenant :
une trajectoire de vol ne passant pas par le lieu d'interdiction de vol, et une trajectoire de vol passant par au moins un lieu d'interdiction de vol mais ayant une altitude actuelle supérieure à l'altitude dudit au moins un lieu d'interdiction de vol, dans lequel la partie de création de carte numérisée (204) crée la carte tridimensionnelle de sorte qu'un lieu dont les données numérisées tridimensionnelles ne sont pas obtenues par le scanner laser (101) prévu dans le véhicule aérien sans pilote (100) est formé en un parallélépipède rectangle sur la carte tridimensionnelle ; et la partie d'extraction de lieu d'interdiction de vol (205) extrait en outre, comme lieu d'interdiction de vol, le lieu formé sur la carte tridimensionnelle en un parallélépipède rectangle dont les données numérisées tridimensionnelles ne sont pas obtenues par le scanner laser (101) prévu dans le véhicule aérien sans pilote (100), et
dans lequel le dispositif de sélection de trajet (108) comprend en outre au moins l'un parmi : une partie de calcul de distance de vol (208) capable de calculer des distances de vol si le véhicule aérien sans pilote (100) vole sur les trajectoires de vol déterminées, et une partie de calcul de quantité de consommation de batterie (209) capable de calculer une quantité de consommation de batterie si le véhicule aérien sans pilote (100) vole sur les trajectoires de vol déterminées, et dans lequel la partie de sélection de trajectoire (206) sélectionne une trajectoire de vol de retour du véhicule aérien sans pilote (100) en utilisant au moins l'une parmi la distance de vol et la quantité de consommation de batterie comme facteur de sélection de trajectoire.

2. Dispositif de sélection de trajectoire (108) selon la revendication 1, **caractérisé en ce qu'**il comprend une partie de génération de signal de manipulation du corps du véhicule (207) qui génère un signal amenant le véhicule aérien sans pilote (100) à voler sur la trajectoire de vol sélectionnée par la partie de sélection de trajectoire.

3. Dispositif de sélection de trajectoire (108) selon la revendication 1, **caractérisé en ce qu'**il comprend une partie de recherche de site atterrissable (210) qui recherche, à partir de la carte tridimensionnelle, un lieu où le véhicule aérien sans pilote (100) peut atterrir,
dans lequel la partie de sélection de trajectoire (206) sélectionne une trajectoire de vol de retour du véhicule aérien sans pilote (100), dans lequel le lieu où le véhicule aérien sans pilote (100) peut atterrir et est recherché par la partie de recherche de site d'atterrissage (210) est utilisé comme position d'atterrissage.

4. Dispositif de sélection de trajectoire (108) selon l'une quelconque des revendications 1 à 3, **caractérisé en ce**
**qu'**il comprend une partie de réception de carte créée extérieurement (211) qui reçoit la carte tridimensionnelle créée à l'extérieur du véhicule aérien sans pilote (100),
dans lequel la partie de sélection de trajectoire (206) sélectionne une trajectoire de vol de retour du véhicule aérien sans pilote (100) en utilisant la carte tridimensionnelle reçue par la partie de réception de carte créée extérieurement (211).

5. Procédé de contrôle d'un véhicule aérien sans pilote (100) pour contrôler le vol de retour du véhicule aérien sans pilote (100), **caractérisé en ce qu'**il comprend :
une étape de réception d'informations de position d'atterrissage dans laquelle une position d'atterrissage du véhicule aérien sans pilote (100) est reçue d'un dispositif d'opération ;
une étape de réception d'informations de position du corps du véhicule dans laquelle une position actuelle du véhicule aérien sans pilote (100) est reçue, la position actuelle étant déterminée par un dispositif de détermination de position GNSS (102) du véhicule aérien sans pilote (100) ;
une étape de réception de données numérisées dans laquelle des données numérisées tridimensionnelles sur une cible numérisée acquise par balayage par un scanner laser (101) prévu dans le véhicule aérien sans pilote (100) sont reçues ;
une étape de création de carte numérisée dans laquelle une carte tridimensionnelle basée sur les données numérisées en trois dimensions reçues dans l'étape de réception de données numérisées est créée ;
une étape d'extraction de lieu d'interdiction de vol dans laquelle un lieu d'interdiction de vol formant un obstacle de vol dans la carte tridimensionnelle est extrait ; et
une étape de sélection de trajectoire dans laquelle une trajectoire de vol déterminée est sélectionnée parmi des trajectoires de vol qui sont déterminées selon la carte tridimensionnelle et le lieu d'interdiction de vol et qui vont de la position actuelle à la position d'atterrissage du véhicule aérien sans pilote (100) et contournent le lieu d'interdiction de vol, en tant que trajectoire de vol de retour du véhicule aérien sans pilote (100), la trajectoire de vol déterminée comprend :
une trajectoire de vol ne passant pas par le lieu d'interdiction de vol, et une trajectoire de vol passant par au moins un lieu d'interdiction de vol mais ayant une altitude actuelle supérieure à l'altitude dudit au moins un lieu d'interdiction de vol, dans lequel, dans l'étape de création de la carte numérisée, la carte tridimensionnelle est créée de sorte qu'un lieu dont les données numérisées en trois dimensions ne sont pas obtenues par le scanner laser (101) prévu dans le véhicule aérien sans pilote (100) est formé en un parallélépipède rectangle sur la carte tridimensionnelle ; et dans l'étape d'extraction du lieu d'interdiction de vol, le lieu formé sur la carte tridimensionnelle en un parallélépipède rectangle dont les données numérisées tridimensionnelles ne sont pas obtenues par le scanner laser (101) prévu dans le véhicule aérien sans pilote (100), est en outre extrait en tant que lieu d'interdiction de vol, et
dans lequel le procédé comprend en outre au moins l'un des éléments suivants : une étape de calcul de la distance de vol dans laquelle les distances de vol si le véhicule aérien sans pilote (100) vole sur les trajectoires de vol déterminées sont calculées, et une étape de calcul de la quantité de consommation de batterie dans laquelle une quantité de consommation de batterie si le véhicule aérien sans pilote (100) vole sur les trajectoires de vol déterminées est calculée, et dans lequel dans l'étape de sélection de trajectoire, une trajectoire de vol de retour du véhicule aérien sans pilote (100) est sélectionnée en utilisant au moins l'une parmi la distance de vol et la quantité de consommation de batterie comme facteur de sélection de trajectoire.

6. Programme de sélection de trajectoire, qui est un programme de contrôle du vol d'un véhicule aérien sans pilote (100) qui est lu et exécuté par un ordinateur, **caractérisé par le fait que** l'ordinateur fonctionne comme :
une partie de réception d'informations de position d'atterrissage (201) qui reçoit une position d'atterrissage du véhicule aérien sans pilote (100) d'un dispositif d'opération ;
une partie de réception d'informations de position du corps du véhicule (202) qui reçoit une position actuelle du véhicule aérien sans pilote (100) déterminée par un dispositif de détermination de position GNSS (102) du véhicule aérien sans pilote (100) ;
une partie de réception de données numérisées (203) capable de recevoir des données numérisées en trois dimensions sur une cible numérisée acquise par balayage par un scanner laser (101) compris dans le véhicule aérien sans pilote (100) ;
une partie de création de carte numérisée (204) qui crée une carte tridimensionnelle basée sur les données numérisées tridimensionnelles reçues par la partie de réception de données numérisées (203) ;
une partie d'extraction de lieu d'interdiction de vol (205) qui extrait un lieu d'interdiction de vol formant un obstacle de vol dans la carte tridimensionnelle ; et une partie de sélection de trajectoire (206) qui sélectionne une trajectoire de vol déterminée qui est une parmi les trajectoires de vol qui sont déterminées selon la carte tridimensionnelle et le lieu d'interdiction de vol et qui vont de la position actuelle à la position d'atterrissage du véhicule aérien sans pilote (100), et dans laquelle le lieu d'interdiction de vol est évité, comme trajectoire de vol de retour du véhicule aérien sans pilote (100), la trajectoire de vol déterminée comprenant : une trajectoire de vol ne passant pas par le lieu d'interdiction de vol, et une trajectoire de vol passant par au moins un lieu d'interdiction de vol mais ayant une altitude actuelle supérieure à l'altitude dudit au moins un lieu d'interdiction de vol, dans laquelle la partie de création de carte numérisée (204) crée la carte tridimensionnelle de sorte qu'un lieu dont les données numérisées tridimensionnelles ne sont pas obtenues par le scanner laser (101) prévu dans le véhicule aérien sans pilote (100) est formé en parallélépipède rectangle sur la carte tridimensionnelle ; et
la partie d'extraction de lieu d'interdiction de vol (205) extrait en outre, comme lieu d'interdiction de vol, le lieu formé sur la carte tridimensionnelle en un parallélépipède rectangle dont les données numérisées en trois dimensions ne sont pas obtenues par le scanner laser (101) prévu dans le véhicule aérien sans pilote (100), et
dans lequel l'ordinateur est en outre amené à fonctionner comme au moins l'un parmi : une partie de calcul de distance de vol (208) capable de calculer des distances de vol si le véhicule aérien sans pilote (100) vole sur les trajectoires de vol déterminées, et une partie de calcul de quantité de consommation de batterie (209) capable de calculer une quantité de consommation de batterie si le véhicule aérien sans pilote (100) vole sur les trajectoires de vol déterminées, et dans lequel la partie de sélection de trajectoire (206) sélectionne une trajectoire de vol de retour du véhicule aérien sans pilote (100) en utilisant au moins l'une de la distance de vol et de la quantité de consommation de batterie comme facteur de sélection de trajectoire.
